(19) Europäisches Patentamt / European Patent Office / Office européen des brevets

(11) **EP 1 809 043 B1**

(12) **EUROPEAN PATENT SPECIFICATION**

(45) Date of publication and mention of the grant of the patent:
**25.03.2020 Bulletin 2020/13**

(51) Int Cl.:
***H04N 19/85*** *(2014.01)*

(21) Application number: **07103949.9**

(22) Date of filing: **01.12.2004**

(54) **Technique for film grain simulation using a database of film grain patterns**

Technik zur Filmkörnigkeitssimulation durch Verwendung einer Datenbank von Filmkörnigkeitsmustern

Procédé permettant de simuler le grain d'un film a l'aide d'une base de données de motifs de grains de films

(84) Designated Contracting States:
**AT BE BG CH CY CZ DE DK EE ES FI FR GB GR HU IE IS IT LI LT LU MC NL PL PT RO SE SI SK TR**

(30) Priority: **05.12.2003 US 527895 P**

(43) Date of publication of application:
**18.07.2007 Bulletin 2007/29**

(62) Document number(s) of the earlier application(s) in accordance with Art. 76 EPC:
**04813479.5 / 1 690 423**

(73) Proprietor: **InterDigital VC Holdings, Inc.**
**Wilmington, DE 19809 (US)**

(72) Inventors:
- **Cooper, Jeffrey Allen**
  **Rock Hill, 08540 (US)**
- **Boyce, Jill MacDonald**
  **Manalapan, NJ 07726 (US)**
- **Llach, Joan**
  **Princeton, NJ 08540 (US)**
- **Tourapis, Alexandros**
  **Burbank, CA 91505 (US)**
- **Yin, Peng**
  **West Windsor, NJ 08550 (US)**
- **Gomila, Cristina**
  **Princeton, NJ 08540 (US)**

(74) Representative: **Huchet, Anne et al**
**InterDigital CE Patent Holdings**
**20, rue Rouget de Lisle**
**92130 Issy-les-Moulineaux (FR)**

(56) References cited:
**WO-A-97/22204**      **US-A- 5 641 596**
**US-A1- 2003 206 662**

- **CHRISTINA GOMILA: "SEI message for film grain encoding: syntax and results" JVT OF ISO IEC MPEG AND ITU-T VCEG JVT-I013 REVISION 2, 2 September 2003 (2003-09-02), pages 1-11, XP002308743 SAN DIEGO, CA, USA**
- **SCHLOCKERMANN M ET AL: "Film grain coding in H.264/AVC" JOINT VIDEO TEAM (JVT) OF ISO/IEC MPEG & ITU-T VCEG (ISO/IEC JTC1/SC29/WG11 AND ITU-T SG16 Q6), 2 September 2003 (2003-09-02), pages 1-8, XP002311238 SAN DIEGO, CA, USA**
- **CHRISTINA GOMILA, ALEXANDER KOBILANSKY: "SEI message for film grain encoding" JVT OF ISO IEC MPEG AND ITU-T VCEG JVT-H022, 23 May 2003 (2003-05-23), pages 1-14, XP002308742 GENEVA, SWITZERLAND**

**Description**

CROSS-REFERENCE TO RELATED APPLICATIONS

This application claims priority under 35 U.S.C. 119(e) to U.S. Provisional Patent Application Serial No. 60/527,895 filed on December 5, 2003, 2003.

TECHNICAL FIELD

This invention relates to a technique for simulating film grain in an image.

BACKGROUND ART

Motion picture films comprise silver-halide crystals dispersed in an emulsion, which is coated in thin layers on a film base. The exposure and development of these crystals form the photographic image consisting of discrete tiny particles of silver. In color negatives, tiny blobs of dye occur on the sites where the silver crystals form following chemical removal of the silver during development of the film stock. These small specks of dye commonly bear the label 'grain' in color film. Grain appears randomly distributed on the resulting image because of the random formation of silver crystals on the original emulsion. Within a uniformly exposed area, some crystals develop after exposure while others do not.

Grain varies in size and shape. The faster the film, the larger the clumps of silver formed and blobs of dye generated, and the more they tend to group together in random patterns. The term "granularity" typically refers to the grain pattern. The naked eye cannot distinguish individual grains, which vary from 0.0002 mm to about 0.002 mm. Instead, the eye resolves groups of grains, referred to as blobs. A viewer identifies these groups of blobs as film grain. As the image resolution becomes larger, the perception of the film grain becomes higher. Film grain becomes clearly noticeable on cinema and High Definition (HD) images, whereas film grain progressively loses importance in Standard Definition (SD) and becomes imperceptible in smaller formats.

Motion picture film typically contains image-dependent noise resulting either from the physical process of exposure and development of the photographic film or from the subsequent editing of the images. Photographic film possesses a characteristic quasi-random pattern, or texture, resulting from physical granularity of the photographic emulsion. Alternatively, simulation of similar pattern can occur in computed-generated images in order to blend them with photographic film. In both cases, this image-dependent noise bears the designation of "film grain." Quite often, moderate grain texture presents a desirable feature in motion pictures. In some instances, the film grain provides visual cues that facilitate the correct perception of two-dimensional pictures. Film grade often varies within a single film to provide various clues as to time reference, point of view, etc. Many other technical and artistic demands exist for controlling grain texture in the motion picture industry. Therefore, preserving the grainy appearance of images throughout image processing and delivery chain has become a requirement in the motion picture industry.

Several commercially available products have the capability of simulating film grain, often for blending a computer-generated object into natural scene. Cineon® from Eastman Kodak Co, Rochester New York, one of the first digital film applications to implement grain simulation, produces very realistic results for many grain types. However, the Cineon® application does not yield good performance for many high speed films because of the noticeable diagonal stripes the application produces for high grain size settings. Further, the Cineon® application fails to simulate grain with adequate fidelity when images become subject to prior processing, for example, such as when the images are copied or digitally processed.

Another commercial product that simulates film grain is *Grain Surgery*™ from Visual Infinity Inc., which is used as a plug-in of Adobe ® After Effects ®. The *Grain Surgery*™ product appears to generate synthetic grain by filtering a set of random numbers. US 2003/206662 A1 (AVINASH GOPAL B [US] ET AL) 6 November 2003 (2003-11-06) discloses to blend pre-generated film grain, which is adapted to the image pixel intensities, on the fly onto the input image. These approaches suffer from disadvantage of a high computational complexity.

Thus, a need exists for an efficient film grain simulation technique, which reduces the need for memory bandwidth, and computational effort, thus permitting film grain simulation in cost-sensitive high volume devices, such as set top boxes.

BRIEF SUMMARY OF THE INVENTION

Briefly, in accordance with one aspect of the present invention, there is provided a method for creating a block of M x N pixels with film grain for blending with pixels of an image block, where N and M are integers greater than zero. The method commences upon the receipt of film grain information that includes at least one parameter that specifies an attribute of the film grain to appear in the film grain block. (Those parameters that are not transmitted shall be set to default values. In a particular embodiment, default values could be derived as specified in the H.264|AVC standard.) A film grain block of M x N pixels is selected from among a database of previously established blocks containing film grain as a function of a pseudo-random number and a set of cut frequencies characterizing the film grain pattern. All the pixel values in the selected film grain block undergo scaling in accordance with the one parameter in the received film grain information. The created block of film grain then becomes part of a pool of film grain blocks from which a block is selected for blending with pixels in an image block to simulate film grain in the image block.

In accordance with another aspect of the present invention, there is provided a method for simulating film grain in an image block of pixels. The method commences upon selection of a block of film grain from a pool of pre-established film grain values. The selection of the block of film grain occurs randomly, in accordance with a random number, amongst those blocks from the pool for the luma intensity interval corresponding to the luma average value of the image block. The selected film grain block undergoes deblocking. At least a portion of the deblocked film grain block is blended with individual pixels of the image block to simulate film grain and the resultant blended pixels are clipped prior to output, such as for display or the like.

BRIEF DESCRIPTION OF THE DRAWINGS

FIGURE 1 depicts a block schematic drawing of an apparatus for generating pre-established film grain blocks for use in subsequent film grain simulation; and
FIGURE 2 depicts a block schematic drawing of an apparatus in accordance with the present principles for simulating film grain on a pixel-by-pixel basis using the pre-established film grain blocks generated by the apparatus of FIG. 1.

DETAILED DESCRIPTION

Introduction

In accordance with the present principles, film grain simulation occurs in accordance with film grain information transmitted with an image to which the simulated grain is blended. In practice, the transmitted image typically undergoes compression (encoding) prior to transmission via one of a variety of well-known compression schemes, such as the H.264 compression scheme. With the transmitted image compressed using the H.264 compression scheme, transmission of the film grain information typically occurs via a Supplemental Enhancement Information (SEI) message. Pursuant to contributions recently adopted by the standards body responsible for promulgating the H.264 standard, such as CHRISTINA GOMILA, "SEI message for film grain encoding: syntax and results", JVT OF ISO IEC MPEG AND ITU-T VCEG JVT-I013 REVISION 2, 02-09-2003, SAN DIEGO, CA, USA, the SEI message can now include various parameters that specify different film grain attributes.

Constraints on the film grain SEI message parameters

The method of the present principles imposes some constraints with regard to the number of parameters and their range of possible values allowed by the H.264 recommendation. TABLE 1 provides a list of such parameters, including a description of their semantics and the constraints imposed by the present principles.

TABLE 1

| FILM GRAIN PARAMETER | DESCRIPTION & CONSTRAINTS |
|---|---|
| **model_id** | This parameter specifies the simulation model. It shall be 0, which identifies the film grain simulation model as frequency filtering. |
| **separate_colour_ description_present_flag** | This parameter specifies if the color space in which the parameters are estimated is different from the color space in which the video sequence (where the film grain SEI message has been embedded) has been encoded. It shall be 0, which identifies the color space for film grain the same than the encoded sequence. |
| **blending_mode_id** | This parameter identifies the blending mode used to blend the simulated film grain with the decoded images. It shall be 0, which correspond to an additive blending mode. |

(continued)

| FILM GRAIN PARAMETER | DESCRIPTION & CONSTRAINTS |
|---|---|
| log2_scale_factor | This parameter identifies the logarithmic scale factor used to represent the film grain parameters in the SEI message. It shall be in the range [0, 4] to ensure film grain simulation can be performed using 16-bit arithmetic. |
| comp_model_present_flag [1] | This parameter enables the transmission of film grain parameters for the Cb color component in the YCbCr color space. It shall be 0, since film grain simulation in chroma is not supported. |
| comp_model_present_flag [2] | This parameter enables the transmission of film grain parameters for the Cr color component in the YCbCr color space. It shall be 0, since film grain simulation in chroma is not supported. |
| num_intensity_intervals_ minus1[0] | This parameter defines the number of intensity intervals for which a specific set of parameters has been estimated. It shall be in the range [0, 7]. |
| intensity_interval_lower_ bound[0][i+1], intensity_ interval_upper_bound[0][i] | These parameters define the boundaries of the luma intensity levels for which different film grain parameters are defined. The lower bound of interval i+1 must be greater than the upper bound of interval i because multigenerational film grain is not allowed. |
| num_model_values_minus1 [0] | This parameter specifies the number of model values present for each intensity interval in which the film grain has been modeled. It shall be in the range [0,2] because color correlation is not allowed. |
| comp_model_value[0] [i] [0] | This parameter represents the film grain intensity for each luminance intensity interval in which film grain has been modeled. It shall be in the range [0,255] to ensure film grain simulation can be performed using 16-bit arithmetic. |

According to the present principles, the parameters comp model value[0][i][1] and comp_model_value[0][i][2] can take different values. However, only a limited number of different pairs (comp model value[0][i][1], comp model value[0][i][2 ]) are allowed, as specified in TABLE 2.

TABLE 2

| comp_model_value[ 0][ i][1] | comp_model_value[ 0][ i][2] |
|---|---|
| 4 | 3 |
| 6 | 4 |
| 7 | 5 |
| 8 | 6 |
| 10 | 7 |
| 11 | 8 |
| 13 | 9 |
| 14 | 10 |
| 15 | 11 |
| 15 | 12 |
| 15 | 13 |
| 15 | 14 |
| 15 | 15 |

All the other parameters of the film grain SEI message have no constraint with respect to the standard specification.

Bit-accurate Implementation of Film Grain Simulation

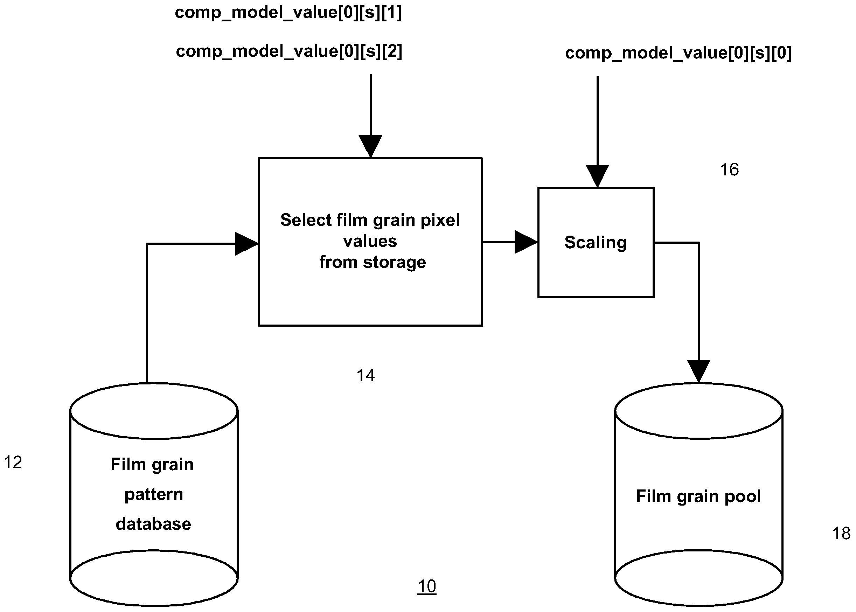

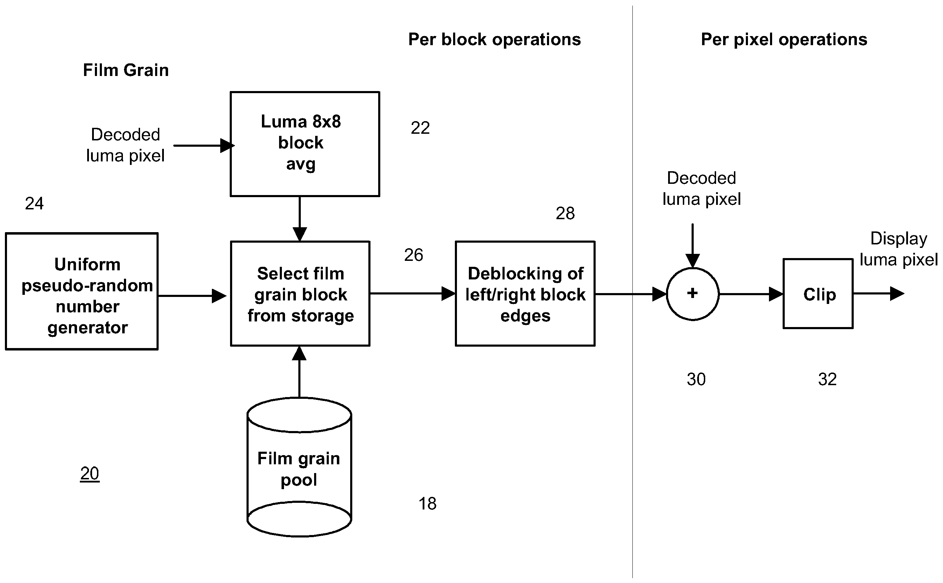

Film grain simulation in accordance with the present principles occurs in a two-step process. First, generation of a pool of film grain blocks occurs during initialization following receipt of an SEI message preceding an I picture, as described in greater detail with respect to FIG. 1. From the pool of film grain blocks, a particular block of values is selected. Thereafter, portions of the selected block are added to each luminance pixel of each decoded picture as described with respect to FIG. 2.

FIGURE 1 depicts an apparatus 10 in accordance with an illustrated embodiment of the present principles for generating a pool of film grain blocks for use in film grain simulation. Upon receipt of a film grain SEI message containing film grain information, an initialization process occurs to create a pool of 4,096 (512x8) film grain pixel values for each of up to 8 different luma intensity intervals. The number of luma intensity intervals is indicated by 1 plus the SEI message field num_intensity_intervals_minus1[0]. Generation of the film grain samples begins with the lowest luma intensity interval.

Bit-accurate simulation of the film grain noise typically occurs by the use of a specified uniform pseudo-random number generator polynomial and by the use of a specified database of film grain patterns 12. In practice, the database 12 of film grain patterns comprises 26 sets of 4,096 (512x8) values of film grain (13 sets with round grain and 13 sets with elongated grain). The values are stored in 2's complement form and range from [-127, 127]. The list of values for each set can be pre-defined and stored in permanent storage accessible by the system or created using a bit accurate method upon system initialization or reset.

The film grain patterns stored in the database 12 undergo selection via a selection block 14 and subsequent scaling via a scaling block 16 to obtain a pool 18 of film grain blocks. The accessing of the database 12 of film grain patterns, the scaling of the values by the block 16, and subsequent storage of the scaled values in blocks in the pool 18 occurs in accordance with the following routine:

for( i = 0..4,095)

$$v = comp\_model\_value[\ 0\ ][\ s\ ][\ 0\ ]\ *\ database[\ m\ ][\ n\ ][\ i\ ]$$

$$pool[\ s\ ][\ i\ ] = (((v + 2^{log2\_scale\_factor\ -\ 1}) >> log2\_scale\_factor\ ) + 32) >> 6$$

where n is equal to **comp_model_value[0][s][2]** - 3, m is equal to 0 when **num_param_minus1[0]** is 1 and equal to 1 otherwise, and the factor 6 scales the film grain values stored in the database. This process is performed as many times as indicated by 1 plus the SEI message field **num_intensity_intervals_minus1[0].**

Block and pixel operations prior to pixel display

FIGURE 2 depicts an apparatus 20 for performing the operations needed to add film grain to the decoded picture at block and pixel level. A luma averaging block 22 processes each 8x8 block of the decoded image and computes the average of the luma pixel values for comparison against the SEI message **intensity_interval_lower_bound[0][i]** and **intensity_interval_upper_bound[0][i]** parameters to determine the correct luma intensity interval for the block. A uniform random number generator 24 generates a random number for input to a selector block 26 using a primitive polynomial modulo 2 operator, $x^{18} + x^5 + x^2 + x^1 + 1$. The selector block 26 accesses the film grain pool 18 to select film grain blocks in accordance with the random number and luma intensity value.

To appreciate the manner in which the random number generator 24 generates the random number for film grain block selection, let x(i, e) indicate the $i^{th}$ symbol of the sequence x, beginning with an initial seed e. (The seed is set to 1 upon the receipt of each film grain SEI message.) The offset for the current 8x8 block of film grain is generated as follows:

```
previous_offset = offset
offset = (x(i, 1) % 4,088 )>> 2
offset ^= (index == previous_offset)
offset <<= 2
```

where offset has been initialized to 0 after the creation of the pool. After the calculation of the offset, the 8x8 block of film grain is extracted from the pool as follows:

for (i = 0..7, j = 0..7)

$$block[i][j] = pool[s][offset + i + j*4096]$$

The film grain block selected by the selector block in accordance with the random number from the random number generator 24 and the average luminance value from the block 22 undergoes deblocking of the pixels on the left and right columns of the block by a deblocking filter 28 prior to blending. Thereafter, an adder 30 adds the corresponding value of the deblocked film grain block to the corresponding decoded pixels, and a clipper 32 clips the results within the range [0, 255] to yield luma pixels blended with film grain for display on a display (not shown) or for subsequent recording. Note that film grain noise is only added to luma pixels.

Deblocking filter 28

As described, the deblocking filter operates to deblock the film grain block before blending to smooth the blocking artifacts resulting from the small size of the transform. In an illustrative embodiment, the deblocking filter 28 comprises a 3-tap filter applied to all pixels bordering the 8x8 block left and right edges. Given a row of pixels belonging to two adjacent 8x8 blocks, the transition between blocks being located between pixels b and c,

| | | | | | a | b | c | d | | | | | |
|---|---|---|---|---|---|---|---|---|---|---|---|---|---|
| Block A | | | | | | | | Block B | | | | | |

the filter is applied as follows:

$$b' = (a + (b << 1) + c) >> 2$$

$$c' = (b + (c << 1) + d) >> 2$$

where b' and c' replace the value of the original pixels b and c, respectively. Deblocking of the left and right block edges is done for every block at display time.

The above-described method for film grain simulation can readily be practiced by content replication devices, such as a DVD player (or player/recorder) or content delivery mechanism such as set top boxes or the like. In the case of a content replication device such as the DVD player or DVD player/recorder, the content medium (e.g., the DVD) would carry the film grain information along with the content itself (i.e., compressed video) to enable the content replication device to simulate film grain in the manner described. Thus, for example a DVD would carry both image information, typically in the form of compressed macroblocks, as well as film grain information, which would enable a DVD player or player/recorder to blend film grain with the decompressed video for subsequent display.

The foregoing describes a technique for simulating film grain in an image. Advantageously, the film grain simulation technique affords the capability of simulating elongated film grain by virtue of the allowed values for the parameter **num_model_values_minus1[0]** as well as the allowed values for the parameters **comp_model_value[0][i][1],** and **comp_model_value[0][i][2].** Moreover, the film grain simulation technique of the present principles, the selection of one set of film grain samples from the database 12 of samples avoids the need for performing a Discrete Cosine Transform (DCT) and an Inverse DCT.

**Claims**

1.    A method of generating a pool (18) of scaled film grain blocks for blending with an image to simulate film grain wherein a scaled film grain block stored in the pool is generated according to:

- selecting a film grain block from among a database of film grain patterns;
- scaling all the pixel values in the block of film grain as indicated by a scaling parameter characterizing the film grain to appear in the image block;

**characterized in that** the selection is controlled by a set of cut frequencies characterizing the film grain to appear in the image block.

2. The method according to claim 1, wherein a scaled film grain block for blending with an image block is selected as a function of a pseudo random number and a luma characteristic of the image block.

3. The method according to claim 1, wherein the database of film grain patterns comprises a predetermined number of sets of 4096 values each.

4. The method according to claim 3, wherein each of the predetermined number of sets of values are arranged as a 512 x 8 matrix.

5. The method according to claim 4 wherein the predetermined number of sets of values are stored in 2's complement and range from [-127, 127].

6. An apparatus comprising a processor configured for generating a pool (18) of scaled film grain blocks for blending with an image to simulate film grain wherein a scaled film grain block stored in the pool is generated according to:

- selecting (14) a film grain block from among a database (12) of film grain patterns;
- scaling (16) all the pixel values in the block of film grain as indicated by a scaling parameter characterizing the film grain to appear in the image block; **characterized in that** the selection (14) is controlled by a set of cut frequencies characterizing the film grain to appear in the image block.

7. The apparatus according to claim 6, wherein a scaled film grain block for blending with an image block is selected (26) as a function of a pseudo random number (24) and a luma characteristic (22) of the image block.

8. The apparatus according to claim 6, wherein the database of film grain patterns comprises a predetermined number of sets of 4096 values each.

9. The apparatus according to claim 8, wherein each of the predetermined number of sets of values are arranged as a 512 x 8 matrix.

10. The apparatus according to claim 9, wherein the predetermined number of sets of values are stored in 2's complement and range from [-127, 127].


**Patentansprüche**

1. Verfahren zum Erzeugen eines Pools (18) von skalierten Filmkornblöcken zum Mischen mit einem Bild, um Filmkorn zu simulieren, wobei ein in dem Pool gespeicherter skalierter Filmkornblock entsprechend erzeugt wird durch:

- Auswählen (14) eines Filmkornblocks aus einer Datenbank mit Filmkornmustern;
- Skalieren (16) aller Pixelwerte im Filmkornblock, wie durch einen Skalierungsparameter angegeben, der das Filmkorn kennzeichnet, damit es im Bildblock erscheint;

**dadurch gekennzeichnet, dass** die Auswahl durch einen Satz von Schnittfrequenzen gesteuert wird, die das Filmkorn kennzeichnen, das im Bildblock erscheinen soll,

2. Verfahren nach Anspruch 1, bei dem ein skalierter Filmkornblock zum Mischen mit einem Bildblock als Funktion einer Pseudozufallszahl und einer Luma-Charakteristik des Bildblocks ausgewählt wird.

3. Verfahren nach Anspruch 1, wobei die Datenbank der Filmkornmuster eine vorbestimmte Anzahl von Sätzen mit jeweils 4096 Werten umfasst.

4. Verfahren nach Anspruch 3, wobei jeder Wertesatz der vorgegebenen Anzahl von Wertesätzen als eine 512 x 8 Matrix angeordnet ist.

5. Verfahren nach Anspruch 4, wobei die vorgegebene Anzahl von Wertesätzen in Zweierkomplementen gespeichert ist und im Bereich von [-127, 127] liegt.

6. Vorrichtung umfassend einen Prozessor, der zum Erzeugen eines Pools (18) von skalierten Filmkornblöcken zum Mischen mit einem Bild konfiguriert ist, um Filmkorn zu simulieren, wobei ein in dem Pool gespeicherter skalierter Filmkornblock entsprechend erzeugt wird durch:

- Auswählen (14) eines Filmkornblocks aus einer Datenbank (12) mit Filmkornmustern;
- Skalieren (16) aller Pixelwerte im Filmkornblock, wie durch einen Skalierungsparameter angegeben, der das Filmkorn kennzeichnet, damit es im Bildblock erscheint; **dadurch gekennzeichnet, dass** die Auswahl (14) durch einen Satz von Schnittfrequenzen gesteuert wird, welche das Filmkorn kennzeichnen, damit es in dem Bildblock erscheint.

**7.** Vorrichtung nach Anspruch 6, wobei ein skalierter Filmkornblock zum Mischen mit einem Bildblock als Funktion einer Pseudozufallszahl (24) und einer Luma-Charakteristik (22) des Bildblocks ausgewählt (26) wird.

**8.** Verfahren nach Anspruch 6, wobei die Datenbank der Filmkornmuster eine vorbestimmte Anzahl von Sätzen mit jeweils 4096 Werten umfasst.

**9.** Verfahren nach Anspruch 8, wobei jeder Wertesatz der vorgegebenen Anzahl von Wertesätzen als eine 512 x 8 Matrix angeordnet ist.

**10.** Verfahren nach Anspruch 9, wobei die vorgegebene Anzahl von Wertesätzen in Zweierkomplementen gespeichert ist und im Bereich von [-127 x 127] liegt.

**Revendications**

**1.** Procédé de génération d'un pool (18) de blocs de grain de film mis à l'échelle pour le mélange avec une image pour simuler un grain de film dans lequel un bloc de grain de film mis à l'échelle stocké dans le pool est généré en fonction de :

- la sélection d'un bloc de grain de film dans une base de données de modèles de grain de film ;
- la mise à l'échelle de toutes les valeurs de pixel dans le bloc de grain de film comme indiqué par un paramètre de mise à l'échelle caractérisant le grain de film devant apparaître dans le bloc d'image ;

**caractérisé en ce que** la sélection est contrôlée par un ensemble de fréquences de coupure caractérisant le grain de film devant apparaître dans le bloc d'image.

**2.** Procédé selon la revendication 1, dans lequel un bloc de grain de film mis à l'échelle pour le mélange avec un bloc d'image est sélectionné en fonction d'un nombre pseudo-aléatoire et d'une caractéristique de luminance du bloc d'image.

**3.** Procédé selon la revendication 1, dans lequel la base de données de modèles de grain de film comprend un nombre prédéterminé d'ensembles de 4 096 valeurs chacun.

**4.** Procédé selon la revendication 3, dans lequel chacun du nombre prédéterminé d'ensembles de valeurs est disposé en matrice 512 x 8.

**5.** Procédé selon la revendication 4, dans lequel le nombre prédéterminé d'ensembles de valeurs est stocké dans un complément à deux et est compris dans la plage [-127, 127].

**6.** Appareil comprenant un processeur configuré pour générer un pool (18) de blocs de grain de film mis à l'échelle pour le mélange avec une image pour simuler un grain de film dans lequel un bloc de grain de film mis à l'échelle stocké dans le pool est généré en fonction de :

- la sélection (14) d'un bloc de grain de film dans une base de données (12) de modèles de grain de film ;
- la mise à l'échelle (16) de toutes les valeurs de pixel dans le bloc de grain de film comme indiqué par un paramètre de mise à l'échelle caractérisant le grain de film devant apparaître dans le bloc d'image ;

**caractérisé en ce que** la sélection (14) est contrôlée par un ensemble de fréquences de coupure caractérisant le grain de film devant apparaître dans le bloc d'image.

7. Appareil selon la revendication 6, dans lequel un bloc de grain de film mis à l'échelle pour le mélange avec un bloc d'image est sélectionné (26) en fonction d'un nombre pseudo-aléatoire (24) et d'une caractéristique de luminance (22) du bloc d'image.

8. Appareil selon la revendication 6, dans lequel la base de données de modèles de grain de film comprend un nombre prédéterminé d'ensembles de 4 096 valeurs chacun.

9. Appareil selon la revendication 8, dans lequel chacun du nombre prédéterminé d'ensembles de valeurs est disposé en matrice 512 x 8.

10. Appareil selon la revendication 9, dans lequel le nombre prédéterminé d'ensembles de valeurs est stocké dans un complément à deux et est compris dans la plage [-127, 127].

comp_model_value[0][s][1]

comp_model_value[0][s][2]

comp_model_value[0][s][0]

16

Select film grain pixel
values
from storage

Scaling

EP 1 809 043 B1

10

14

12

Film grain
pattern
database

Film grain pool

18

10

Per pixel operations

Per block operations

Film Grain

Display luma pixel

Clip — 32

Decoded luma pixel

+ — 30

Deblocking of left/right block edges — 28

Luma 8x8 block avg — 22

Select film grain block from storage — 26

Film grain pool — 18

Decoded luma pixel

Uniform pseudo-random number generator — 24

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 52789503

- US 2003206662 A1

**Non-patent literature cited in the description**

- **CHRISTINA GOMILA.** SEI message for film grain encoding: syntax and results. *JVT OF ISO IEC MPEG AND ITU-T VCEG JVT-I013 REVISION 2,* 02 September 2003